(19) Europäisches Patentamt
European Patent Office
Office européen des brevets

(11) **EP 2 869 519 A1**

(12) **EUROPEAN PATENT APPLICATION**
published in accordance with Art. 153(4) EPC

(43) Date of publication:
**06.05.2015 Bulletin 2015/19**

(51) Int Cl.:
***H04L 27/00*** *(2006.01)*

(21) Application number: **12882167.5**

(86) International application number:
**PCT/CN2012/079509**

(22) Date of filing: **01.08.2012**

(87) International publication number:
**WO 2014/019171 (06.02.2014 Gazette 2014/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Huawei Technologies Co., Ltd.**
**Longgang District**
**Shenzhen, Guangdong 518129 (CN)**

(72) Inventors:
• **MAZZARESE, David**
**Shenzhen**
**Guangdong 518129 (CN)**
• **ZHOU, Yongxing**
**Shenzhen**
**Guangdong 518129 (CN)**

• **XIA, Liang**
**Shenzhen**
**Guangdong 518129 (CN)**
• **REN, Xiaotao**
**Shenzhen**
**Guangdong 518129 (CN)**
• **SUN, Jingyuan**
**Shenzhen**
**Guangdong 518129 (CN)**

(74) Representative: **Körber, Martin Hans**
**Mitscherlich PartmbB**
**Patent- und Rechtsanwälte**
**Sonnenstrasse 33**
**80331 München (DE)**

(54) **DATA DEMODULATION METHOD AND SYSTEM, AND USER EQUIPMENT**

(57)    The present invention discloses a method and a system for data demodulation, and a user equipment. An interference statistic characteristic is measured by using an IMR instead of a CRS or a non-zero power CSI-RS, so that the obtained interference statistic characteristic can truly reflect an interference statistic characteristic that a DMRS actually experiences, and then a PDSCH is demodulated, so as to improve accuracy of channel estimation.

FIG. 1

**Description**

**TECHNICAL FIELD**

Embodiments of the present invention relate to the field of communications, and in particular, to a method and a system for data demodulation, and a user equipment.

**BACKGROUND**

In a wireless communications system, a user equipment (user equipment, UE) demodulates a physical downlink shared channel (physical downlink shared channel, PDSCH) according to a user specific reference signal (UE specific reference signal), where the user specific reference signal is also called a demodulation reference signal (demodulation reference signal, DMRS).
A process that a UE demodulates a PDSCH according to a DMRS includes a channel estimation process and a process of performing demodulation by using a result of the channel estimation. Currently, in the channel estimation process, a cell specific reference signal (cell specific reference signal, CRS) or a non-zero power (non-zero power, NZP) channel state information reference signal (channel state information reference signal, CSI-RS) is used to measure a statistic characteristic of a downlink channel and an interference statistic characteristic, and then these statistic characteristics are used to perform channel estimation.
However, with the introduction of a coordinated multi-point (coordinated multi-point, CoMP) technology, a problem of inaccuracy exists in the foregoing method for channel estimation, because in a CoMP system, one or more access points (access point, AP) send or receive data for a UE, and the UE needs to measure and report channel state information (channel state information, CSI) of the one or more APs to a base station. Interference situations may also be different when the UE is served by different APs or subjected to interference from APs having different sending power, and therefore, a interference statistic characteristic obtained through measurement that is performed by using a CRS or a non-zero power CSI-RS may not correspond to an interference statistic characteristic that a DMRS actually experiences, thereby causing inaccurate channel estimation, and then reducing a user throughput.

**SUMMARY**

In view of this, embodiments of the present invention provide a method and a system for data demodulation, and a user equipment, so as to solve a technical problem that channel estimation is inaccurate in an existing PDSCH demodulation process, and then improve a user throughput.
In a first aspect, a method for data demodulation is provided and includes: obtaining, by a user equipment (UE), a first interference measurement resource (IMR); and demodulating a physical downlink shared channel (PDSCH) according to the first IMR.
In a first possible implementation manner of the first aspect, the obtaining, by a UE, a first IMR includes: receiving, by the UE, a channel state information (CSI) process sent by a base station, where the CSI process includes a channel part and an interference part, the channel part includes a cell specific reference signal (CRS) or a non-zero power channel state information reference signal (CSI-RS), and the interference part includes the first IMR; and obtaining, by the UE, the first IMR from the CSI process.
In a second possible implementation manner of the first aspect, with reference to the first possible implementation manner of the first aspect, the UE receives the CSI process through dynamic signaling.
In a third possible implementation manner of the first aspect, with reference to the first possible implementation manner of the first aspect or the second possible implementation manner of the first aspect, the demodulating a PDSCH according to the first IMR includes: measuring, by the UE, a statistic characteristic of a downlink channel according to the CRS or the non-zero power CSI-RS; measuring an interference statistic characteristic according to the first IMR; performing channel estimation according to the statistic characteristic of the downlink channel and the interference statistic characteristic that are obtained through measurement; and demodulating the PDSCH according to a result of the channel estimation.
In a fourth possible implementation manner of the first aspect, the obtaining, by a UE, a first IMR includes: receiving, by the UE, multiple CSI processes sent by a base station, where each CSI process includes a channel part and an interference part, the channel part includes a CRS or a non-zero power CSI-RS, and the interference part includes an IMR; receiving indication signaling sent by the base station; selecting a CSI process from the multiple CSI processes according to the indication signaling; and obtaining an IMR from the selected CSI process as the first IMR.
In a fifth possible implementation manner of the first aspect, with reference to the fourth possible implementation manner of the first aspect, the UE receives, through high layer signaling, the multiple CSI processes sent by the base station.

In a sixth possible implementation manner of the first aspect, with reference to the fourth possible implementation manner of the first aspect or the fifth possible implementation manner of the first aspect, the UE receives the indication signaling through dynamic signaling.

In a seventh possible implementation manner of the first aspect, with reference to one of the fourth possible implementation manner of the first aspect to the sixth possible implementation manner of the first aspect, the demodulating a PDSCH according to the first IMR includes: measuring, by the UE, a statistic characteristic of a downlink channel according to a CRS or a non-zero power CSI-RS in the selected CSI process; measuring an interference statistic characteristic according to the first IMR; performing channel estimation according to the statistic characteristic of the downlink channel and the interference statistic characteristic that are obtained through measurement; and demodulating the PDSCH according to a result of the channel estimation.

In a second aspect, a user equipment (UE) is provided and includes: an obtaining unit, configured to obtain a first interference measurement resource (IMR); and a demodulating unit, configured to demodulate a physical downlink shared channel (PDSCH) according to the first IMR.

In a first possible implementation manner of the second aspect, the UE further includes: a receiving unit, configured to receive a (channel state information) CSI process sent by a base station, where the CSI process includes a channel part and an interference part, the channel part includes a cell specific reference signal (CRS) or a non-zero power channel state information reference signal (CSI-RS), and the interference part includes the first IMR; and the obtaining unit further obtains the first IMR from the CSI process.

In a second possible implementation manner of the second aspect, with reference to the first possible implementation manner of the second aspect, the receiving unit receives the CSI process through dynamic signaling.

In a third possible implementation manner of the second aspect, with reference to the first possible implementation manner of the second aspect or the second possible implementation manner of the second aspect, the UE further includes: a first measuring unit, configured to measure a statistic characteristic of a downlink channel according to the CRS or the non-zero power CSI-RS; a second measuring unit, configured to measure an interference statistic characteristic according to the first IMR; and a channel estimating unit, configured to perform channel estimation according to the statistic characteristic of the downlink channel and the interference statistic characteristic that are obtained through measurement, where the demodulating unit is further configured to demodulate the PDSCH according to a result of the channel estimation of the channel estimating unit.

In a fourth possible implementation manner of the second aspect, the UE further includes: a receiving unit, configured to receive multiple CSI processes sent by a base station, where each CSI process includes a channel part and an interference part, the channel part includes a CRS or a non-zero power CSI-RS, and the interference part includes an IMR, where the receiving unit is further configured to receive indication signaling sent by the base station; and a selecting unit, configured to select a CSI process from the multiple CSI processes according to the indication signaling, where the obtaining unit is configured to obtain an IMR from the selected CSI process as the first IMR.

In a fifth possible implementation manner of the second aspect, with reference to the fourth possible implementation manner of the second aspect, the receiving unit receives, through high layer signaling, the multiple CSI processes sent by the base station.

In a sixth possible implementation manner of the second aspect, with reference to the fourth possible implementation manner of the second aspect or the fifth possible implementation manner of the second aspect, the receiving unit receives the indication signaling through dynamic signaling.

In a seventh possible implementation manner of the second aspect, with reference to one of the fourth possible implementation manner of the second aspect to the sixth possible implementation manner of the second aspect, the UE further includes: a first measuring unit, configured to measure a statistic characteristic of a downlink channel according to a CRS or a non-zero power CSI-RS in the CSI process selected by the selecting unit; a second measuring unit, configured to measure an interference statistic characteristic according to the first IMR; and a channel estimating unit, configured to perform channel estimation according to the statistic characteristic of the downlink channel and the interference statistic characteristic that are obtained through measurement, where the demodulating unit is further configured to demodulate the PDSCH according to a result of the channel estimation of the channel estimating unit.

In a third aspect, a system for data demodulation is provided and includes the user equipment UE according to the second aspect or any one of the implementation manners of the second aspect, and a base station communicating with the UE.

It can be seen that in the embodiments of the present invention, an interference statistic characteristic is measured by using an IMR instead of a CRS or a non-zero power CSI-RS, so that the obtained interference statistic characteristic can truly reflect an interference statistic characteristic that a DMRS actually experiences, and then a PDSCH is demodulated, so as to improve accuracy of channel estimation.

## BRIEF DESCRIPTION OF DRAWINGS

FIG. 1 is a flow chart of a method for data demodulation provided in an embodiment of the present invention;

FIG. 2 is a flow chart of a PDSCH demodulation process provided in an embodiment of the present invention;

FIG. 3 is a schematic principle diagram of a method for data demodulation provided in an embodiment of the present invention;

FIG. 4 is a schematic flow chart of a method for data demodulation provided in an embodiment of the present invention;

FIG. 5 is a flow chart of another PDSCH demodulation process provided in an embodiment of the present invention;

FIG. 6 is a schematic flow chart of another method for data demodulation provided in an embodiment of the present invention;

FIG. 7 is a flow chart of still another PDSCH demodulation process provided in an embodiment of the present invention;

FIG. 8 is a schematic principle diagram of another method for data demodulation provided in an embodiment of the present invention;

FIG. 9 is a function block diagram of a UE provided in an embodiment of the present invention;

FIG. 10 is a function block diagram of another UE provided in an embodiment of the present invention;

FIG. 11 is a function block diagram of still another UE provided in an embodiment of the present invention;

FIG. 12 is a schematic structural diagram of a UE provided in an embodiment of the present invention; and

FIG. 13 is a schematic structural diagram of a base station provided in an embodiment of the present invention.

## DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by a person of ordinary skill in the art based on the embodiments of the present invention without creative efforts shall fall within the protection scope of the present invention.

In some embodiments, a well-known method, interface and device signaling technology are not described in detail, so as to avoid obscuring the present invention due to unnecessary details. Furthermore, independent function modules are shown in some accompany drawings. A person of ordinary skill in the art may understand that, these functions may be implemented by adopting the following manners: an independent hardware circuit, software operated in cooperation with a digital microprocessor that is properly programmed or in cooperation with a general-purpose computer, an application-specific integrated circuit (ASIC) and/or one or more digital signal processors (DSP).

Currently, in a CoMP system, interference situations may be different when a UE is served by different APs or subjected to interference from APs having different sending power, and therefore, a basis (such as, an NZP CSI-RS) on which a statistic characteristic of a downlink channel and an interference statistic characteristic are calculated may not correspond to an actual DMRS, thereby causing inaccurate channel estimation. Therefore, in a PDSCH demodulation process, demodulation performed by using a result of the inaccurate channel estimation is inaccurate. For this reason, in the embodiments of the present invention, an interference measurement resource (interference measurement resource, IMR) is used to replace a CRS or a non-zero power CSI-RS to measure an interference statistic characteristic, and then demodulate a PDSCH, so as to improve accuracy of channel estimation.

The foregoing AP may be, for example, a cell, a node corresponding to a cell (such as, a relay node), a remote radio head (remote radio head, RRH), a radio remote unit (radio remote unit, RRU), or an antenna unit (antenna unit, AU), which may be collectively called a transmission point (TP).

It should be noted that, to conform to different CoMP transmission solutions, a UE reports CSI that implies interference related information to a base station. For example, configuration of each CSI may include a channel part (channel part) and an interference part (interference part), where the channel part may be implemented by configuring, in a CoMP measurement set, a non-zero power (non-zero power, NZP) CSI-RS resource; and the interference part is an IMR, which occupies a subset of a resource element (resource element, RE) of, for example, zero power (zero power, ZP) CSI-RS configuration. The UE measures a downlink channel separately through the channel part for the configuration of each CSI, and measures interference through the interference part. The UE calculates, according to a measurement result of the downlink channel and the interference, CSI corresponding to the configuration of the CSI, and reports the CSI to the base station.

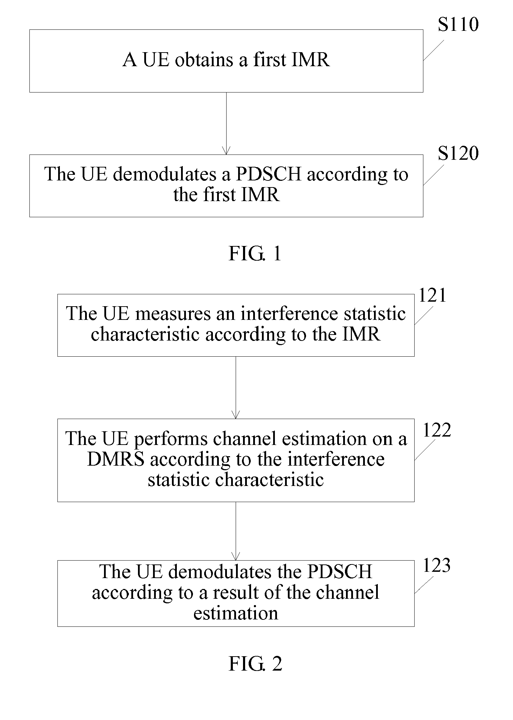

Referring to FIG. 1, FIG. 1 is a schematic flow chart of a method for data demodulation provided in an embodiment of the present invention. As shown in the figure, the method includes the following steps.

S110: A UE obtains a first IMR.

S120: The UE demodulates a PDSCH according to the first IMR.

In this embodiment, compared with using a CRS or a non-zero power CSI-RS to demodulate the PDSCH, using an IMR to demodulate the PDSCH may ensure correspondence between an interference statistic characteristic that is in channel estimation of a demodulation process and an interference statistic characteristic that a DMRS actually experiences, which improves accuracy of the channel estimation and then improves a user throughput.

The following takes a pilot signal transmission model as shown in formula (1) as an example to describe an effect of the foregoing method.

When channel estimation is performed according to a DMRS, to improve accuracy of the channel estimation, the UE may adopt a Wiener filtering algorithm, which is also called a minimum mean square error (minimum mean square error, MMSE) algorithm. For example, a channel estimation algorithm based on Wiener filtering is as follows:

it is assumed that the pilot signal transmission model is shown in Formula (1):

$$Y = XH + N \qquad (1)$$

where, $Y$ is a receiving vector of $M \times 1$ ($M$ is the number of pilots); $X$ is a diagonal matrix of $M \times M$, an element on a diagonal is a pilot signal $X_k$, and $k=1,2,...,M$; $H$ is a pilot channel vector of $M \times 1$; and $N$ is an interference noise signal of $M \times 1$.

First, least square (Least Square, LS) estimation is performed on a channel at a pilot location, as shown in Formula (2):

$$\tilde{H} = X^{-1}Y \qquad (2)$$

where, $\tilde{H}$ is an estimation value of $H$.

Then, Wiener filtering is performed on $\tilde{H}$, as shown in Formula (3):

$$\tilde{H}' = R_{H'H}\left(R_{HH} + \frac{1}{Es}R_I\right)^{-1}\tilde{H} \qquad (3)$$

where, $\tilde{H}'$ is a channel estimation value at an interpolation location; $R_{H'H}$ is a time domain or frequency domain correlation matrix between the interpolation location and the pilot location; $R_{HH}$ is a time domain or frequency domain autocorrelation matrix of the pilot location; $Es$ is pilot sending power; and $R_I$ is an interference noise matrix (also called a noise matrix or an interference matrix). $R_{H'H}\left(R_{HH} + \frac{1}{Es}R_I\right)^{-1}$ is a Wiener filtering coefficient. The UE needs to obtain a statistic characteristic ($R_{H'H}$ and $R_{HH}$) of a downlink channel and an interference statistic characteristic ($R_I$), and calculates the Wiener filtering coefficient according to these statistic characteristics, so as to complete channel estimation. The foregoing interference statistic characteristic may also be called an interference noise statistic characteristic or a noise statistic characteristic, and for convenience, may be collectively called an interference statistic characteristic.

It can be seen that accuracy of the statistic characteristic ($R_{H'H}$ and $R_{HH}$) of the downlink channel and the interference statistic characteristic ($R_I$) directly relates to accuracy of the channel estimation. When a CoMP technology is not introduced, an interference statistic characteristic is measured by using a CRS and a non-zero power CSI-RS, which more truly reflects correspondence between the interference statistic characteristic and an interference statistic characteristic that a DMRS actually experiences. However, after the CoMP technology is introduced, an interference statistic characteristic obtained through measurement performed by using a non-zero power CSI-RS may not correspond to an interference statistic characteristic that a DMRS actually experiences. For example, APs participating in CoMP communication are three cells. A UE accepting a CoMP service may be served by any one or more cells, and the rest cells are interfering cells. When the UE is served, if no downlink data is transmitted in an interfering cell, a PDSCH of the interfering cell does not interfere with the UE, but a CRS or a non-zero power CSI-RS of the interfering cell still interferes with the UE. In this case, an interference statistic characteristic obtained through measurement performed by using a CRS or a non-zero power CSI-RS obviously cannot reflect a true situation. However, an interference statistic characteristic obtained through measurement performed by using an IMR can more truthfully reflect an interference statistic characteristic that a DMRS actually experiences, which improves accuracy of channel estimation, and then improves a user throughput.

Continuing to refer to FIG. 2, the foregoing step S120 may further include the following steps.

S121: The UE measures an interference statistic characteristic according to the IMR.

S122: The UE performs channel estimation on a DMRS according to the interference statistic characteristic.

S123: The UE demodulates the PDSCH according to a result of the channel estimation, where the interference statistic characteristic may be a noise matrix.

It should be noted that an IMR that is used by the UE to demodulate the PDSCH is notified by a base station to the UE. Preferably, the base station may notify the UE through a CSI process (also called a CSI configuration message). Moreover, the number of CSI processes that are notified by the base station to the UE may be more than one. Correspondingly, the number of IMRs that are notified to the UE may also be more than one. Therefore, under different circumstances, the base station notifies, through dynamic signaling, according to an actual situation of a serving cell and an actual situation of an interfering cell, the UE to use a corresponding IMR, which ensures that the interference statistic characteristic obtained through measurement and the interference statistic characteristic that the DMRS actually experiences are relatively consistent, so as to improve the accuracy of the channel estimation and then improve the user throughput. Detailed description is made in the following through the embodiments and with reference to the accompanying drawings.

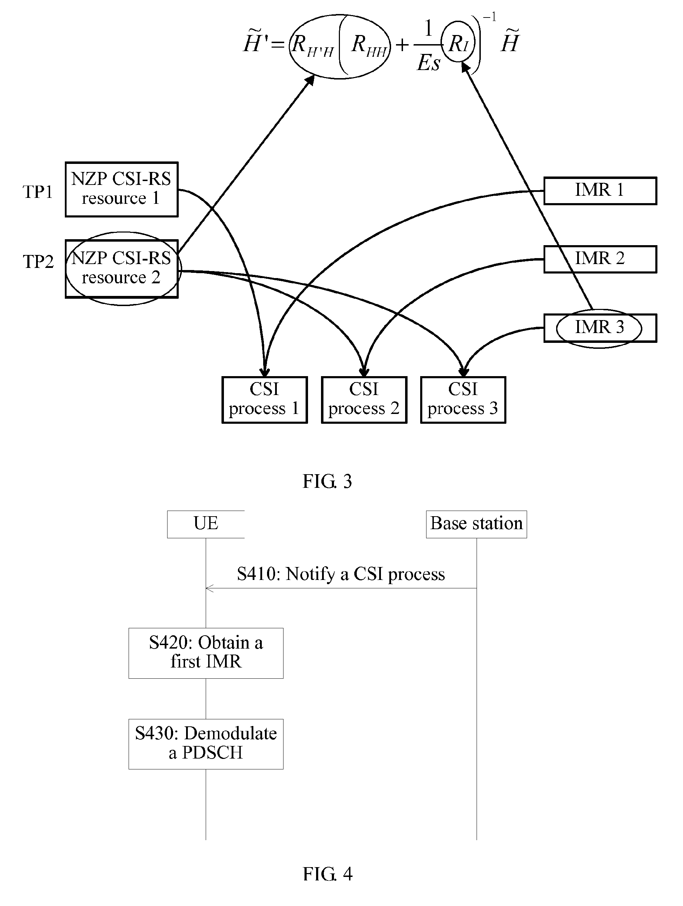

Referring to FIG. 3, FIG. 3 is a schematic principle diagram of a method for data demodulation provided in an embodiment of the present invention. As shown in FIG. 3, a base station configures multiple CSI processes for a UE. In the embodiment, three CSI processes are taken as an example, which is not used to limit the present invention. A CSI process 1 includes a non-zero power (NZP) CSI-RS resource 1 of a transmission point 1 (TP1) and an IMR1; a CSI process 2 includes a non-zero power CSI-RS resource 2 of a transmission point 2 (TP2) and an IMR2; and a CSI process 3 includes the non-zero power CSI-RS resource 2 of the transmission point 2 (TP2) and an IMR3. The IMR1 corresponds to that the transmission point 1 sends a zero power (ZP) CSI-RS, and the transmission point 2 sends a signal; the IMR2 corresponds to that the transmission point 2 does not send a signal, and the transmission point 1 sends a zero power CSI-RS; and the IMR3 corresponds to that the transmission point 1 and the transmission point 2 send a same zero power CSI-RS. It is assumed that the transmission point 2 sends a PDSCH, and meanwhile, the transmission point 1 does not send a signal. In this case, the UE is not subjected to interference from the transmission point 1. The UE measures a statistic characteristic of a downlink channel and an interference statistic characteristic separately by using the non-zero power CSI-RS resource 2 and the IMR3 of the CSI process 3, which ensures that the interference statistic characteristic obtained through measurement can more truly reflect an interference statistic characteristic that a DMRS actually experiences, and then improves accuracy of channel estimation.

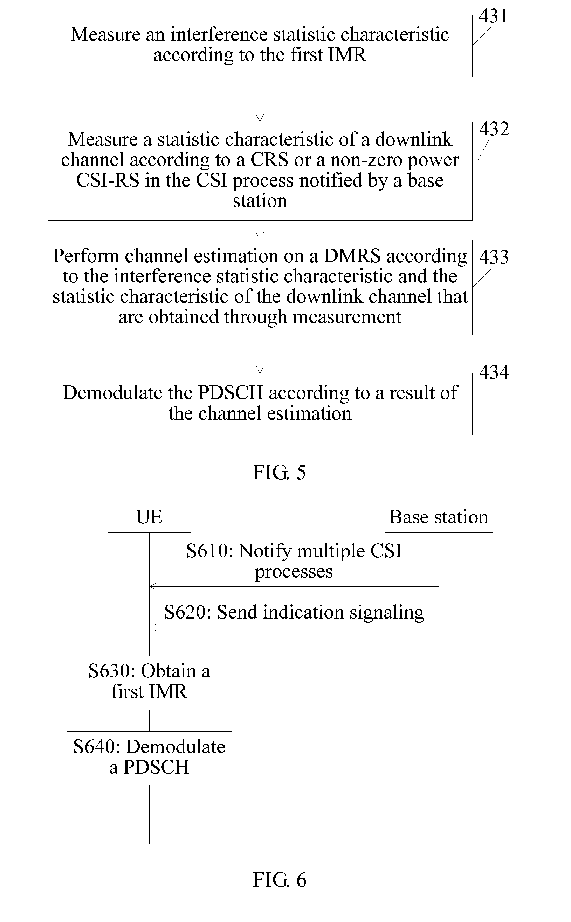

How the base station notifies the UE to select the CSI process 3 to measure the statistic characteristic of the downlink channel and the interference statistic characteristic is described in detail with reference to FIG. 4 and FIG. 6.

Referring to FIG. 4, FIG. 4 is a schematic flow chart of a method for data demodulation provided in an embodiment of the present invention. In this embodiment, a base station directly and dynamically notifies a UE of a CSI process that should be adopted. With reference to a scenario shown in FIG. 3, the method includes the following steps.

S410: A base station notifies a UE of a CSI process 3, where the CIS process 3 includes a channel part and an interference part, the channel part includes a CRS or a non-zero power CSI-RS, and the interference part includes a first IMR.

S420: The UE obtains the first IMR from the CSI process.

S430: Demodulate a PDSCH according to the first IMR.

It should be noted that, the foregoing CSI process 3 refers to a CSI process that adapts to a current situation and is determined by the base station according to a situation of a current serving cell and a situation of a current interfering cell, and is not used to limit the present invention. Under another circumstance, a CSI process that is notified by the base station to the UE may also be another CSI process, such as a CSI process 1 or a CSI process 2. Definitely, as the situation of the serving cell and the situation of the interfering cell change, the base station may adjust the CSI process to a CSI process that adapts to the change, and send the adjusted CSI process to the UE through dynamic signaling. The dynamic signaling may be, for example, downlink control information (downlink control information, DCI).

In addition, as shown in FIG. 5, the foregoing step S430 may further include the following steps.

S431: Measure an interference statistic characteristic according to the first IMR.

S432: Measure a statistic characteristic of a downlink channel according to the CRS or the non-zero power CSI-RS in the CSI process notified by the base station.

S433: Perform channel estimation on a DMRS according to the interference statistic characteristic and the statistic characteristic of the downlink channel that are obtained through measurement, where the interference statistic characteristic may be a noise matrix, and the statistic characteristic of the downlink channel may be a time domain correlation matrix, a frequency domain correlation matrix, a delay power spectrum, or a Doppler power spectrum of the downlink channel.

S434: Demodulate the PDSCH according to a result of the channel estimation.

It should be noted that there is no sequence requirement between the foregoing step S431 and step S432. The interference statistic characteristic may be measured first, and then the statistic characteristic of the downlink channel is measured; or the statistic characteristic of the downlink channel may be measured first, and then the interference statistic characteristic is measured; or the interference statistic characteristic and the statistic characteristic of the downlink channel may be measured at the same time, which is not limited in the embodiment of the present invention at all.

In addition, the base station may notify the UE of the first IMR, and the CRS or the non-zero power CSI-RS in an independent encoding or joint encoding manner.

Referring to FIG. 6, FIG. 6 is a schematic flow chart of another method for data demodulation provided in an embodiment of the present invention. In this embodiment, a base station notifies a UE of multiple CSI processes, and then dynamically notifies the UE of a CSI process that should be selected. With reference to a scenario shown in FIG. 3, the method includes the following steps.

S610: A base station notifies a UE of multiple CSI processes, where each CSI process includes a channel part and an interference part, the channel part includes a CRS or a non-zero power CSI-RS, and the interference part includes an IMR.

S620: The base station sends indication signaling to the UE, where the indication signaling is used to instruct the UE to select a CSI process 3 among the multiple CSI processes to measure an interference statistic characteristic and a statistic characteristic of a downlink channel.

S630: The UE obtains the first IMR from the selected CSI process.

S640: Demodulate a PDSCH according to the first IMR.

It should be noted that the foregoing CSI process 3 refers to a CSI process that adapts to a current situation and is determined by the base station according to a situation of a current serving cell and a situation of a current interfering cell, and is not used to limit the present invention. Under another circumstance, a CSI process that is notified by the base station to the UE may also be another CSI process, such as a CSI process 1 or a CSI process 2. Definitely, as the situation of the serving cell and the situation of the interfering cell change, the base station may adjust the CSI process to a CSI process that adapts to the change, and notify the UE of the adjusted CSI process through indication signaling, so that the UE performs selection.

Preferably, the base station may notify the UE of multiple CSI processes through high layer signaling; and may send indication signaling through dynamic signaling. Moreover, the indication signaling may include an identification field, used to identify and indicate CSI selected by the UE; and may also be a CSI process that the base station notifies the UE to adopt. In this case, an implementation process is the same as the embodiment shown in FIG. 4, and details are not described herein again. In addition, the high layer signaling may be, for example, radio resource control (radio resource control, RRC) signaling, and the dynamic signaling may be downlink control information (downlink control information, DCI).

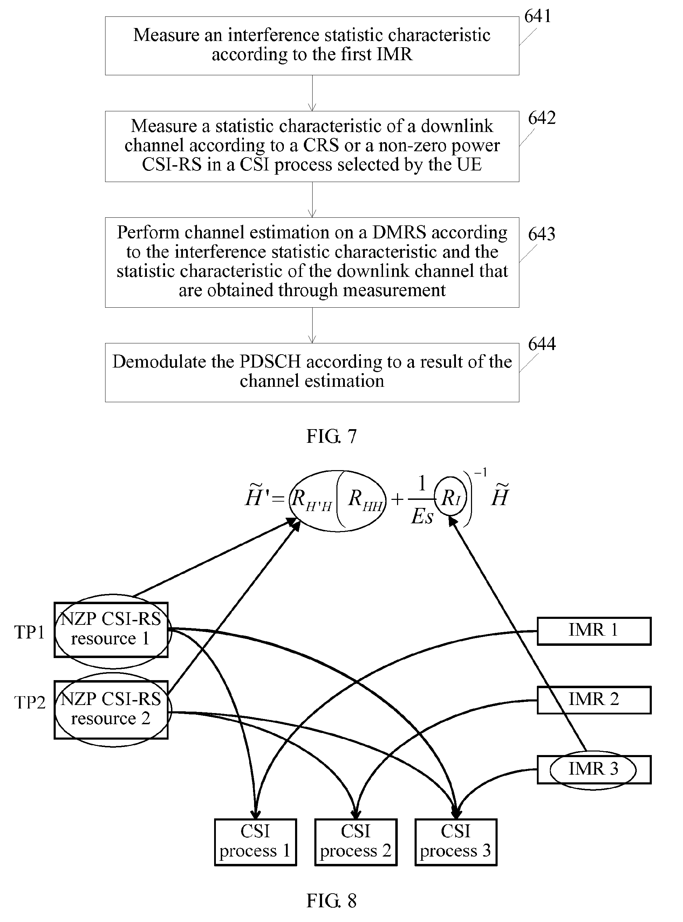

In addition, as shown in FIG. 7, the foregoing step S640 may further include the following steps.

S641: Measure the interference statistic characteristic according to the first IMR.

S642: Measure the statistic characteristic of the downlink channel according to a CRS or a non-zero power CSI-RS in the CSI process selected by the UE.

S643: Perform channel estimation on a DMRS according to the interference statistic characteristic and the statistic characteristic of the downlink channel that are obtained through measurement, where the interference statistic characteristic may be a noise matrix, and the statistic characteristic of the downlink channel may be a time domain correlation matrix, a frequency domain correlation matrix, a delay power spectrum, or a Doppler power spectrum of the downlink channel.

S644: Demodulate the PDSCH according to a result of the channel estimation.

It should be noted that there is no sequence requirement between the foregoing step S641 and step S642. The interference statistic characteristic may be measured first, and then the statistic characteristic of the downlink channel is measured; or the statistic characteristic of the downlink channel may be measured first, and then the interference statistic characteristic is measured; or the interference statistic characteristic and the statistic characteristic of the downlink channel may be measured at the same time, which is not limited in the embodiment of the present invention at all.

In addition, the base station may notify the UE of an IMR and a CRS or a non-zero power CSI-RS of each CSI in an independent encoding or joint encoding manner.

In the embodiment shown in FIG. 3, a channel part of each CSI process may include a non-zero power CSI-RS. In addition, the channel part of each CSI process may include multiple non-zero power CSI-RSs. As shown in FIG. 8, a CSI process 1 includes a non-zero power CSI-RS resource 1 of a transmission point 1 (TP1) and an IMR1, a CSI process 2 includes a non-zero power CSI-RS resource 2 of a transmission point 2 (TP2) and an IMR2, and a CSI process 3 includes the non-zero power CSI-RS resource 1 of the transmission point 1, the non-zero power CSI-RS resource 2 of the transmission point 2 (TP2), and an IMR 3. The IMR1 corresponds to that the transmission point 1 sends a zero power CSI-RS, and the transmission point 2 sends a signal; the IMR2 corresponds to that the transmission point 2 does not send a signal, and the transmission point 1 sends a zero power CSI-RS; and the IMR3 corresponds to that the transmission point 1 and the transmission point 2 send a same zero power CSI-RS. It is assumed that the transmission point 1 and the transmission point 2 send PDSCHs. In this case, the UE is not subjected to interference from the transmission point 1. The UE measures a statistic characteristic of a downlink channel and an interference statistic characteristic separately by using the non-zero power CSI-RS resource 1, the non-zero power CSI-RS resource 2, and the IMR3 of the CSI process 3, which ensures that the interference statistic characteristic obtained through measurement can more truly reflect an interference statistic characteristic that a DMRS actually experiences, and then improves accuracy of channel estimation.

A CoMP coordination manner includes joint processing (joint processing, JP) and coordinated scheduling/coordinated beamforming (CS/CB), where the JP manner includes joint transmission (JT), dynamic transmission point selection (DPS), and a hybrid model of them. The JT means that multiple transmission points send data to the UE simultaneously so as to improve signal receiving quality or a throughput. The DPS means that only one transmission point on a certain time and frequency domain resource sends data to the UE, and in a next subframe, it may be changed to that another transmission point sends data to the UE. The CS/CB means that, for a certain time and frequency domain resource, data is sent to the UE only from one transmission point, but a scheduling/beam decision is made by multiple transmission points in a coordinated manner. It can be seen that the embodiment shown in FIG. 3 is applicable to a DPS or CS/CB scenario, and the embodiment shown in FIG. 8 is applicable to a JT scenario. However, the embodiment of the present invention is not limited thereto.

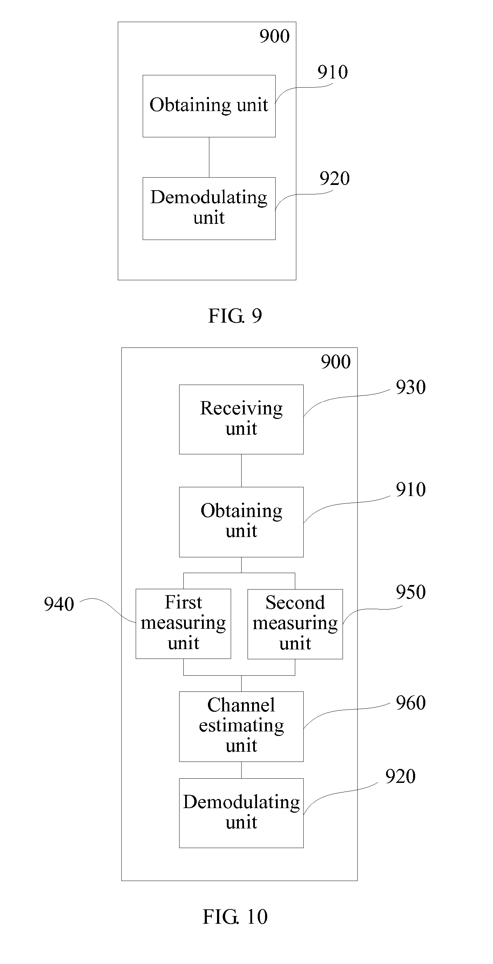

Continuing to refer to FIG. 9, an embodiment of the present invention further provides a user equipment UE900, including an obtaining unit 910 and a demodulating unit 920. The obtaining unit 910 is configured to obtain a first IMR; and the demodulating unit 720 is configured to demodulate a PDSCH according to the first IMR.

Further, as shown in FIG. 10, the UE900 may further include a receiving unit 930, configured to receive a CSI process sent by a base station, where the CSI process includes a channel part and an interference part, the channel part includes a CRS or a non-zero power CSI-RS, and the interference part includes the first IMR. The obtaining unit 910 further obtains the first IMR from the CSI process received by the receiving unit 930.

Preferably, the UE900 may further include a first measuring unit 940, a second measuring unit 950, and a channel estimating unit 960. The first measuring unit 940 is configured to measure a statistic characteristic of a downlink channel according to the CRS or the non-zero power CSI-RS received by the receiving unit 930; the second measuring unit 950 is configured to measure an interference statistic characteristic according to the first IMR; the channel estimating unit 960 is configured to perform channel estimation according to the statistic characteristic of the downlink channel and the interference statistic characteristic that are obtained through measurement; and the demodulating unit 920 is further configured to demodulate the PDSCH according to a result of the channel estimation of the channel estimating unit 960.

The first measuring unit 940 and the second measuring unit 950 in the foregoing may be integrated into one measuring unit, or may be different measuring units, which is not limited in the embodiment of the present invention.

It should be noted that the UE900 may be configured to implement any method provided in the foregoing method embodiments, and a notifying manner about a CSI process (or an IMR) and a manner for demodulating the PDSCH are the same as those in the foregoing method embodiments. Details are not described herein again.

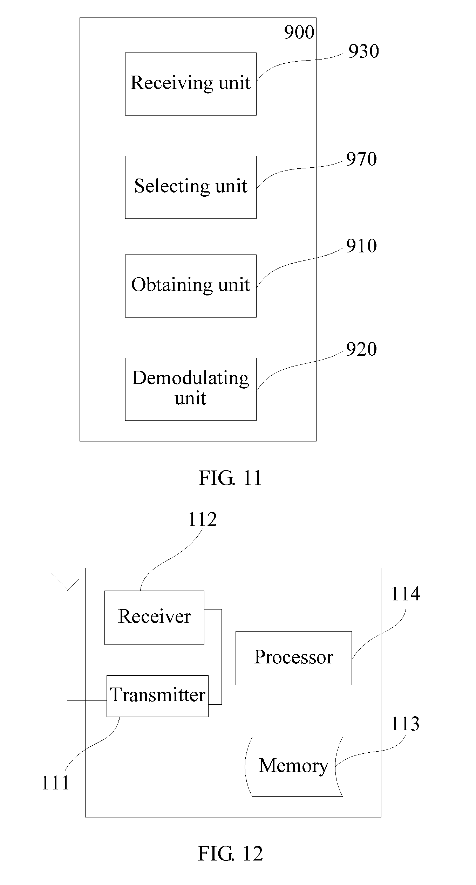

Continuing to refer to FIG. 11, in another embodiment, The UE900 may further include a receiving unit 930 and a selecting unit 970. The receiving unit 930 is configured to receive multiple CSI processes sent by a base station, where each CSI process includes a channel part and an interference part, the channel part includes a CRS or a non-zero power CSI-RS, and the interference part includes an IMR; the receiving unit 930 is further configured to receive indication signaling sent by the base station; the selecting unit 970 is configured to select a CSI process from the multiple CSI processes according to the indication signaling; and the obtaining unit 910 is configured to obtain an IMR from the selected CSI process as the first IMR.

Definitely, in this embodiment, the UE900 may further include a first measuring unit, a second measuring unit, and a channel estimating unit, and their functions are similar to those in the embodiment shown in FIG. 10, but the first measuring unit measures a statistic characteristic of a downlink channel according to a CRS or a non-zero power CSI-RS in the CSI process selected by the selecting unit, and the second measuring unit measures an interference statistic characteristic according to the IMR in the CSI process selected by the selecting unit. Other contents are not described herein again.

In hardware implementation, the obtaining unit 910 and the demodulating unit 920 may be embedded into a processor of the UE900 in a hardware form or in a software form. Likewise, the first measuring unit 940, the second measuring unit 950, the selecting unit 970, and the channel estimating unit 960 may also be embedded into the processor of the UE900 in a hardware form or in a software form. In addition, the foregoing receiving unit 930 may be a receiver.

For example, referring to FIG. 11, FIG. 11 is a schematic structural diagram of a UE provided in an embodiment of the present invention. As shown in the figure, the UE includes a transmitter 111, a receiver 112, a memory 113, and a processor 114. Definitely, the UE may further include a general-purpose component, such as an antenna, a baseband processing component, an intermediate radio frequency processing component, and an input and output device, which is not limited in the embodiment of the present invention. The transmitter 111 and the receiver 112 may be integrated together as a transceiver for communicating with a base station. The memory 113 stores a set of program codes. The processor 114 is configured to invoke the program codes stored by the memory, so as to execute any method provided in the foregoing method embodiments, for example, to execute the following operations: obtaining a first IMR; and demodulating a PDSCH according to the first IMR.

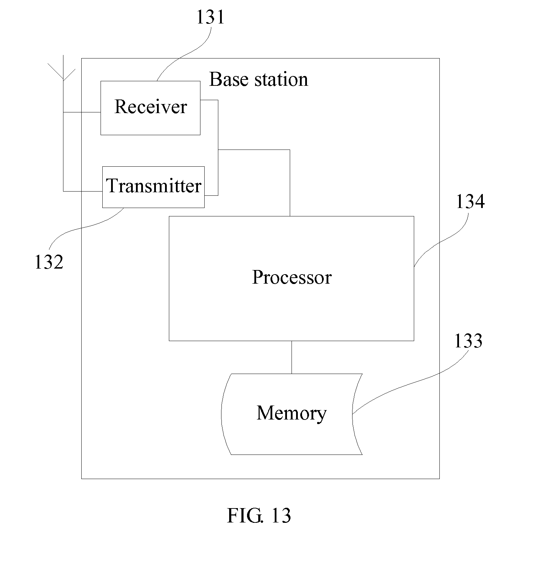

Referring to FIG. 13, FIG. 13 is a schematic structural diagram of a base station provided in an embodiment of the present invention. As shown in the figure, the base station includes a receiver 131, a transmitter 132, a memory 133, and a processor 134. Definitely, the base station may further include a general-purpose component, such as an antenna, a baseband processing component, an intermediate radio frequency processing component, and an input and output device, which is not limited in the embodiment of the present invention. The receiver 131 and the transmitter 132 may be integrated together as a transceiver for communicating with a UE. The memory 133 stores a set of program codes. The processor 134 is configured to invoke the program codes stored by the memory, so as to execute operations executed by the base station shown in FIG. 4 or FIG. 6, which include: dynamically notifying the UE of a CSI process or indication signaling; and may further include: notifying the UE of multiple CSI processes. For details, reference is made to the foregoing method embodiments. Details are not described herein again.

In addition, an embodiment of the present invention further provides a system for data demodulation, including any UE disclosed in the embodiments shown in FIG. 9 to FIG. 12, and a base station (as shown in FIG. 13) communicating with the UE. The base station is configured to notify the UE of an IMR, and the UE demodulates a PDSCH according to the IMR notified by the base station.

In addition, an embodiment of the present invention further provides a computer program product, including a computer readable medium, where the readable medium includes a set of program codes, used to execute any method for data demodulation in the method embodiments disclosed in FIG. 1 to FIG. 8.

Through the description of the foregoing implementation manners, a person skilled in the art may clearly understand that the present invention may be implemented by using hardware, firmware, or a combination of them. When the present invention is implemented by using software, the foregoing functions may be stored in a computer readable medium or as one or more instructions or codes on a computer readable medium for transmission. The computer readable medium includes a computer storage medium and a communications medium, where the communications medium includes any medium for conveniently transferring a computer program from one place to another place. The storage medium may be any available medium that can be accessed by a computer. The following is taken as an example but is not limited to: The computer readable medium may include a RAM, a ROM, an EEPROM, a CD-ROM or another optical disc storage, magnetic disk storage or another magnetic storage device, or any other medium that can be used to carry or store desired program codes in the form of instructions or data structures and can be accessed by a computer. In addition, any connection may be appropriately used as a computer readable medium. For example, if the software is transmitted from a website, a server, or another remote source by using a coaxial cable, a fiber optic cable, a twisted pair, a digital subscriber line (DSL), or wireless technologies such as infrared, radio, and microwave, the coaxial cable, the fiber optic cable, the twisted pair, the DSL, or the wireless technologies such as infrared, radio, and microwave are included in the definition of the medium. Disk (Disk) and disc (disc), as used in the present invention, include a compact disc (CD), a laser disc, an optical disc, a digital versatile disc (DVD), a floppy disk, and a Blu-ray disc, where disks usually reproduce data magnetically, while discs reproduce data optically with lasers. The foregoing combination should also be included in the protection scope of the computer readable medium.

In conclusion, the foregoing descriptions are merely exemplary embodiments of the present invention, but are not intended to limit the protection scope of the present invention. Any modification, equivalent replacement, or improvement made within the spirit and principle of the present invention shall all fall within the protection scope of the present invention.

**Claims**

1. A method for data demodulation, comprising:

    obtaining, by a user equipment UE, a first interference measurement resource IMR; and
    demodulating a physical downlink shared channel PDSCH according to the first IMR.

2. The method according to claim 1, wherein the obtaining, by a UE, a first IMR comprises:

    receiving, by the UE, a channel state information CSI process sent by a base station, wherein the CSI process comprises a channel part and an interference part, the channel part comprises a cell specific reference signal CRS or a non-zero power channel state information reference signal CSI-RS, and the interference part comprises the first IMR; and

obtaining, by the UE, the first IMR from the CSI process.

3. The method according to claim 2, wherein the UE receives the CSI process through dynamic signaling.

4. The method according to claim 2 or 3, wherein the demodulating a PDSCH according to the first IMR comprises:

measuring, by the UE, a statistic characteristic of a downlink channel according to the CRS or the non-zero power CSI-RS;

measuring an interference statistic characteristic according to the first IMR;

performing channel estimation according to the statistic characteristic of the downlink channel and the interference statistic characteristic that are obtained through measurement; and

demodulating the PDSCH according to a result of the channel estimation.

5. The method according to claim 1, wherein the obtaining, by a UE, a first IMR comprises:

receiving, by the UE, multiple CSI processes sent by a base station, wherein each CSI process comprises a channel part and an interference part, the channel part comprises a CRS or a non-zero power CSI-RS, and the interference part comprises an IMR;

receiving indication signaling sent by the base station;

selecting a CSI process from the multiple CSI processes according to the indication signaling; and

obtaining an IMR from the selected CSI process as the first IMR.

6. The method according to claim 5, wherein the UE receives, through high layer signaling, the multiple CSI processes sent by the base station.

7. The method according to claim 5 or 6, wherein the UE receives the indication signaling through dynamic signaling.

8. The method according to any one of claims 5 to 7, wherein the demodulating a PDSCH according to the first IMR comprises:

measuring, by the UE, a statistic characteristic of a downlink channel according to a CRS or a non-zero power CSI-RS in the selected CSI process;

measuring an interference statistic characteristic according to the first IMR;

performing channel estimation according to the statistic characteristic of the downlink channel and the interference statistic characteristic that are obtained through measurement; and

demodulating the PDSCH according to a result of the channel estimation.

9. A user equipment UE, comprising:

an obtaining unit, configured to obtain a first interference measurement resource IMR; and

a demodulating unit, configured to demodulate a physical downlink shared channel PDSCH according to the first IMR.

10. The UE according to claim 9, further comprising:

a receiving unit, configured to receive a channel state information CSI process sent by a base station, wherein the CSI process comprises a channel part and an interference part, the channel part comprises a cell specific reference signal CRS or a non-zero power channel state information reference signal CSI-RS, and the interference part comprises the first IMR; wherein

the obtaining unit further obtains the first IMR from the CSI process.

11. The UE according to claim 10, wherein the receiving unit receives the CSI process through dynamic signaling.

12. The UE according to claim 10 or 11, further comprising:

a first measuring unit, configured to measure a statistic characteristic of a downlink channel according to the CRS or the non-zero power CSI-RS;

a second measuring unit, configured to measure an interference statistic characteristic according to the first IMR; and

a channel estimating unit, configured to perform channel estimation according to the statistic characteristic of the downlink channel and the interference statistic characteristic that are obtained through measurement; wherein

the demodulating unit is further configured to demodulate the PDSCH according to a result of the channel estimation of the channel estimating unit.

13. The UE according to claim 9, further comprising:

a receiving unit, configured to receive multiple CSI processes sent by a base station, wherein each CSI process comprises a channel part and an interference part, the channel part comprises a CRS or a non-zero power CSI-RS, and the interference part comprises an IMR, wherein

the receiving unit is further configured to receive indication signaling sent by the base station; and

a selecting unit, configured to select a CSI process from the multiple CSI processes according to the indication signaling, wherein

the obtaining unit is configured to obtain an IMR from the selected CSI process as the first IMR.

14. The UE according to claim 13, wherein the receiving unit receives, through high layer signaling, the multiple CSI processes sent by the base station.

15. The UE according to claim 13 or 14, wherein the receiving unit receives the indication signaling through dynamic signaling.

16. The UE according to any one of claims 13 to 15, further comprising:

a first measuring unit, configured to measure a statistic characteristic of a downlink channel according to a CRS or a non-zero power CSI-RS in the CSI process selected by the selecting unit;

a second measuring unit, configured to measure an interference statistic characteristic according to the first IMR; and

a channel estimating unit, configured to perform channel estimation according to the statistic characteristic of the downlink channel and the interference statistic characteristic that are obtained through measurement; wherein

the demodulating unit is further configured to demodulate the PDSCH according to a result of the channel estimation of the channel estimating unit.

17. A system for data demodulation, comprising the user equipment UE according to any one of claims 9 to 16, and a base station communicating with the UE.

18. A computer program product, comprising a computer readable medium, wherein the readable medium comprises a set of program codes, used to execute the method for data demodulation according to any one of claims 1 to 9.

S110

A UE obtains a first IMR

S120

The UE demodulates a PDSCH according to the first IMR

FIG. 1

121

The UE measures an interference statistic characteristic according to the IMR

122

The UE performs channel estimation on a DMRS according to the interference statistic characteristic

123

The UE demodulates the PDSCH according to a result of the channel estimation

FIG. 2

$$\widetilde{H}' = \left( R_{H'H} \left( R_{HH} \right) + \frac{1}{Es} \left( R_I \right) \right)^{-1} \widetilde{H}$$

TP1 — NZP CSI-RS resource 1

TP2 — NZP CSI-RS resource 2

IMR 1

IMR 2

IMR 3

CSI process 1

CSI process 2

CSI process 3

FIG. 3

UE

Base station

S410: Notify a CSI process

S420: Obtain a first IMR

S430: Demodulate a PDSCH

FIG. 4

Measure an interference statistic characteristic according to the first IMR — 431

Measure a statistic characteristic of a downlink channel according to a CRS or a non-zero power CSI-RS in the CSI process notified by a base station — 432

Perform channel estimation on a DMRS according to the interference statistic characteristic and the statistic characteristic of the downlink channel that are obtained through measurement — 433

Demodulate the PDSCH according to a result of the channel estimation — 434

FIG. 5

UE | Base station

S610: Notify multiple CSI processes

S620: Send indication signaling

S630: Obtain a first IMR

S640: Demodulate a PDSCH

FIG. 6

Measure an interference statistic characteristic according to the first IMR — 641

Measure a statistic characteristic of a downlink channel according to a CRS or a non-zero power CSI-RS in a CSI process selected by the UE — 642

Perform channel estimation on a DMRS according to the interference statistic characteristic and the statistic characteristic of the downlink channel that are obtained through measurement — 643

Demodulate the PDSCH according to a result of the channel estimation — 644

FIG. 7

$$\widetilde{H}' = \left( R_{H'H} \left( R_{HH} \right) + \frac{1}{Es} \left( R_I \right) \right)^{-1} \widetilde{H}$$

TP1 — NZP CSI-RS resource 1

TP2 — NZP CSI-RS resource 2

IMR 1

IMR 2

IMR 3

CSI process 1    CSI process 2    CSI process 3

FIG. 8

900

910
Obtaining unit

920
Demodulating unit

FIG. 9

900

930
Receiving unit

910
Obtaining unit

940
First measuring unit

950
Second measuring unit

960
Channel estimating unit

920
Demodulating unit

FIG. 10

FIG. 11

FIG. 12

131

Base station

Receiver

Transmitter

132

Processor

134

Memory

133

FIG. 13

# INTERNATIONAL SEARCH REPORT

International application No.

**PCT/CN2012/079509**

### A. CLASSIFICATION OF SUBJECT MATTER

H04L 27/00 (2006.01) i

According to International Patent Classification (IPC) or to both national classification and IPC

### B. FIELDS SEARCHED

Minimum documentation searched (classification system followed by classification symbols)

IPC: H04L, H04W

Documentation searched other than minimum documentation to the extent that such documents are included in the fields searched

Electronic data base consulted during the international search (name of data base and, where practicable, search terms used)

WPI, EPODOC, CNPAT, CNKI: statistics, signal, PDSCH, user, interfere, measurement, down, channel, demodulat+, power, base w station

### C. DOCUMENTS CONSIDERED TO BE RELEVANT

| Category* | Citation of document, with indication, where appropriate, of the relevant passages | Relevant to claim No. |
|---|---|---|
| X | CN 1893335 A (YUANDONGLI COMMUNICATION SCIENCE AND TECHNOLOGY CO., LTD.), 10 January 2007 (10.01.2007), description, page 2, line 8 to page 3, line 18, and page 4, line 9 to page 6, antepenultimate line | 1, 9, 17, 18 |
| A | CN 101931493 A (HUAWEI TECHNOLOGIES CO., LTD.), 29 December 2010 (29.12.2010), the whole document | 1-18 |
| A | CN 101998681 A (HUAWEI TECHNOLOGIES CO., LTD.), 30 March 2011 (30.03.2011), the whole document | 1-18 |
| A | US 7006464 B1 (LUCENT TECHNOLOGIES INC.), 28 February 2006 (28.02.2006), the whole document | 1-18 |

☐ Further documents are listed in the continuation of Box C.          ☒ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| 12 April 2013 (12.04.2013) | **16 May 2013 (16.05.2013)** |

| Name and mailing address of the ISA/CN: | Authorized officer |
|---|---|
| State Intellectual Property Office of the P. R. China No. 6, Xitucheng Road, Jimenqiao Haidian District, Beijing 100088, China Facsimile No.: (86-10) 62019451 | **LI, Jia** Telephone No.: (86-10) **62414020** |

Form PCT/ISA/210 (second sheet) (July 2009)

## INTERNATIONAL SEARCH REPORT
### Information on patent family members

| | International application No. |
|---|---|
| | **PCT/CN2012/079509** |

| Patent Documents referred in the Report | Publication Date | Patent Family | Publication Date |
|---|---|---|---|
| CN 1893335 A | 10.01.2007 | None | |
| CN 101931493 A | 29.12.2010 | None | |
| CN 101998681 A | 30.03.2011 | None | |
| US 7006464 B1 | 28.02.2006 | EP 1207635 A1 | 22.05.2002 |

Form PCT/ISA/210 (patent family annex) (July 2009)